# EUROPÄISCHE PATENTSCHRIFT

(11) **EP 0 362 629 B1**
(45) Veröffentlichungstag und Bekanntmachung des Hinweises auf die Patenterteilung: **24.11.1993**
(21) Anmeldenummer: 89117467.4
(22) Anmeldetag: 21.09.1989
(51) Int. Cl.: C08F 10/02, C08F 2/34, C08F 2/44

(54) **Vermeidung von farbigen Verunreinigungen bei der Herstellung von ultrahochmolekularen Ethylenpolymerisaten mittels eines Titan enthaltenden Katalysatorsystems**
Avoidance of coloured contaminations during the preparation of ultra-high molecular weight polyethylenes by means of a catalyst containing titanium
Prévention de contaminants colorés pendant la préparation de polyéthylène de poids moléculaire ultra-haut à l'aide d'un catalyseur contenant du titane

(30) Priorität: 01.10.1988 DE 3833445
(43) Veröffentlichungstag der Anmeldung: 11.04.1990
(73) Patentinhaber: BASF Aktiengesellschaft, 67063 Ludwigshafen (DE)
(72) Erfinder: Funk, Guido, Dr., D-6520 Worms 1 (DE); Weber, Siegfried, Dr., D-6940 Weinheim (DE); Hemmerich, Rainer, Dr., D-6718 Gruenstadt (DE)

(56) Entgegenhaltungen:
- EP-A- 0 229 368
- EP-A- 0 232 701
- EP-A- 0 260 647

## Beschreibung

Die Erfindung betrifft ein Verfahren zur Herstellung von ultrahochmolekularen Ethylenpolymerisaten durch Homopolymerisation von Ethylen oder Copolymerisation von Ethylen mit Ethylen copolymerisierbaren Verbindungen durch kontinuierliches Einführen der Monomeren in ein Polymerisationssystem, in dem eine Temperatur zwischen 60 und 125°C und ein Druck zwischen 5 und 70 bar herrscht, wobei man die Polymerisation in Anwesenheit eines Titan enthaltenden Katalysators, eines Antistatikums und gegebenenfalls eines Molekulargewichtsreglers in der Gasphasenpolymerisation in einem durchmischten Schüttbett aus kleinteiligem Polymerisat mit einem mittleren Teilchendurchmesser von gleich oder kleiner als 1 mm unter Abfuhr der Polymerisationswärme durch Kühlung des Ethylenkreisgases ausführt, und Austragen des Polymerisats aus dem Polymerisationssystem.

Bei derartigen Verfahren können Homo- und Copolymerisate des Ethylens mit Dichten zwischen 0,915 und 0,955 g/cm³ und mittleren Molekulargewichten von gleich oder größer als 1·10⁶ erhalten werden, wobei durch den Wegfall von Löse- bzw. Suspensionsmittel oder hohem Druck die Gewinnung der Polymerisate stark vereinfacht ist.

Verfahren zur Herstellung von Ethylenpolymerisaten in der Gasphase in einem durchmischten trockenen Schüttbett aus kleinteiligem Polymerisat unter Abfuhr der Polymerisationswärme durch Kühlung des im Kreislauf geführten Ethylens sind aus der Literatur bekannt (vgl. Ullmanns Encyklopädie der technischen Chemie 4, [1980], [19], Seite 186, Verlag Chemie GmbH, D-6940 Weinheim, die US-Patente 4 012 573, 4 427 573, 4 376 191 und 4 467 080, die EP-A-0 110 087, EP-A-0 050 013, EP-A-0 050 477 und EP-A-0 059 080 sowie insbesondere die EP-A-0 230 019 und die EP-A-0 260 647).

Nach den bekannten Verfahren werden Titan enthaltende Katalysatoren oder Phillipskatalysatoren und Wasserstoff als Molekulargewichtsregler eingesetzt. Der Reaktor kann z.B. aus der Gaseintrittszone, einem zylindrischen Reaktionsteil und einer Beruhigungszone, in der die Polymerisatteilchen von nicht umgesetztem Gas getrennt werden, bestehen. Der Durchmesser eines solchen bekannten Reaktors liegt in der Polymerisationszone bei 4,5 m (vgl. "Chemical Engineering" 80, [1973], [27], Seiten 72 bis 73).

Wichtig ist jedoch bei diesem Polyethylenherstellprozeß, der nahe der Sintertemperatur des Polyethylens verläuft, unter konstanten Reaktionsbedingungen und konstanten Mischbedingungen zu arbeiten. Es hat sich trotz der Fülle gradueller Verbesserungen immer wieder als nachteilig erwiesen, daß es zu Produktabscheidungen an den Reaktorwänden und -einbauten und zur Bildung von Polymerbrocken kommt. Damit können keine konstanten Reaktionsbedingungen mehr eingehalten werden.

Schwankende Produktqualität und kurze Reaktorlaufzeiten mit anschließend aufwendiger Reaktorreinigung sind die Folge.

Aus der Literatur ist es bereits bekannt, zur Vermeidung von Belagbildung bei der Polymerisation von Olefinen in der flüssigen Phase bzw. bei flüssigkeitsähnlichen Dichten und Lösungseigenschaften überkritischen Ethylens sowie bei der Suspensionspolymerisation des Ethylens dem Polymerisationssystem ein Antistatikum zuzusetzen (vgl. EP-A1-107 127, US-Patent 4 220 580 sowie Chemical Abstracts 83, [1975], 116 444 und 94, [1981], 16340). Bei diesen bekannten Verfahren können Ladungen, die sich auf den suspendierten Polymer- oder Katalysatorkörnern gebildet haben, zur Wand abfließen bzw. es können bei der Hochdruckpolymerisation die Reaktion kontrolliert und die Eigenschaften des Hochdruckpolyethylens verbessert werden.

Aus der EP-A-0 232 701 ist auch bereits ein Verfahren zur Herstellung von ultrahochmolekularen Ethylenpolymerisaten durch Polymerisation von Ethylen in einem Polymerisationssystem, in dem eine Temperatur zwischen 60 und 125°C und ein Druck zwischen 5 und 70 bar herrscht bekannt, wobei man die Polymerisation in Anwesenheit eines Katalysators und eines Antistatikums in der Gasphase in einem durchmischten Schüttbett aus kleinteiligem Polymerisat mit einer mittleren Teilchengröße von gleich oder kleiner als 1 mm unter Abfuhr der Polymerisationswärme durch Kühlung des Ethylenkreisgases ausführt, wobei bevorzugt das Antistatikum vor Beginn und während der Polymerisation dem Schüttbett zugesetzt wird.

Bei Anwendung dieses Verfahrens zur Herstellung von ultrahochmolekularem Polyethylen mit einem Titan enthaltenden Fällungskatalysator, z.B. gemäß der in der EP-A-0 230 019 und der EP-A-0 260 647 beschriebenen Verfahren, fallen in Gegenwart eines Antistatikums schwarze Verunreinigungen im Produkt an und das Polymerisat besitzt eine sehr niedrige Schüttdichte.

Aufgabe der vorliegenden Erfindung war es, die Ausbildung von Polymerbrocken, Reaktorbelägen und die Belagbildung an den Einbauten bei der Gasphasenpolymerisation des Ethylens zu verhindern und eine einwandfreie Durchströmung des durchmischten Schüttbettes aus besonders kleinteiligem Polymerisat mit Reaktions- und Kreisgas zu gewährleisten, wobei gleichzeitig die Produktqualität des ultrahochmolekularen Ethylenpolymerisats hinsichtlich schwarzer Verunreinigungen und höherer Schüttdichte zu verbessern war.

Diese Aufgaben wurden durch ein Verfahren gelöst, bei dem das Antistatikum in Mengen von 5 bis 1000 Gew.%, bezogen auf die Katalysatorkomponente, vor dem Eindosieren in das Polymerisationssystem mit dem Katalysator in Gegenwart mindestens eines ein- oder mehrwertigen Alkohols mit Schmelzpunkten unterhalb der polymerisationstemperatur umgesetzt und das entstandene Reaktionsprodukt dem Schüttbett von oben getrennt von den Reaktanden zugegeben wird.

Nach bevorzugten Verfahren erfolgt die Umsetzung des Antistatikums und des Alkohols mit dem Katalysator durch Mischen zwischen 0 und 50°C in geringen Mengen eines inerten organischen Lösungsmittels, vorzugsweise Kohlenwasserstoffen vorteilhaft einem acyclischen Kohlenwasserstoff, insbesondere Paraffinöl oder Heptan.

Bevorzugt ist das Antistatikum ein Chromsalz der Alkylsalicylsäure vorteilhaft mit einer Alkylgruppe von 14 bis 18 Kohlenstoffatomen, ein Chromsalz einer C₁₀- bis C₁₈-Alkylanthranilsäure, insbesondere Stearylanthranilsäure, ein Calciumsalz eines eine Sulfonsäuregruppe tragenden Diesters einer Alkandicarbonsäure mit 4 bis 6 Kohlenstoffatomen und Alkanolen mit 4 bis 20 Kohlenstoffatomen, vorteilhaft einem Sulfobernsteinsäureester, insbesondere Bernsteinsäuredioctyl- oder -didecylesters, ein Calciumsalz der Medialansäure oder ein Gemisch aus den genannten Komponenten.

Insbesondere wird das Antistatikum in Mengen von 50 bis 500 Gew.% mit Katalysator umgesetzt.

Bevorzugt erfolgt die Umsetzung des Antistatikums mit dem Katalysator durch Mischen, bei Temperaturen zwischen 25 und 35°C in geringen Mengen eines organischen Lösungsmittels.

Bevorzugt ist der Alkohol in Mengen vorhanden, in denen das molare Verhältnis von Titan im Katalysator zu Hydroxylgruppen im Alkohol 1:0,5 bis 1:10, insbesondere 1:0,5 bis 1:5 beträgt.

Geeignete Alkohole, haben vorteilhaft 1 bis 10, insbesondere 4 bis 8 Kohlenstoffatome mit bis zu 3 Hydroxylgruppen. Vorzugsweise verwendet man Alkanole mit 4 bis 10 Kohlenstoffatomen wie Butanol, Hexanol, Octanol, 2-Ethylhexanol oder Alkandiole mit 2 bis 8 Kohlenstoffatomen wie Glykol, Butandiol oder Alkantriole mit 3 bis 8 Kohlenstoffatomen wie Glycerin.

Besonders bevorzugt sind die Alkohole Hexanol oder Glycerin.

Die Aufgabe wurde ferner gelöst durch ein ultrahochmolekulares Ethylenpolymerisat nach einem der Ansprüche 1 bis 8.

Unter ultrahochmolekularen Ethylenpolymerisaten werden Polyethylen sowie die mit Ethylen unter den angegebenen Bedingungen herstellbaren Copolymerisate des Ethylens mit α-Monoolefinen verstanden, deren Molekulargewicht 1·10⁶ überschreitet. Bevorzugt weisen die Ethylenpolymerisate ein Molekulargewicht von 3 x 10⁶ bis 6 x 10⁶ auf. Unter Molekulargewicht wird dabei das Viskositätsmittel verstanden, bestimmt nach Mark-Houwink bei 135°C in Decalin. Ultrahochmolekulare Ethylenpolymerisate sind an sich bekannt.

Als Comonomere zum Ethylen kommen insbesondere n-Buten-1, n-Hexen-1, 4-Methylpenten-1 oder Propen in Betracht. Die erhaltenen Ethylenpolymerisate weisen Dichten zwischen 0,910 und 0,940 g/cm³, gemessen nach DIN 53479, auf. Die Ethylenpolymerisate fallen in kleinteiliger Form als feiner oder grober Grieß an, wobei der Teilchendurchmesser im allgemeinen im Bereich von etwa 0,03 bis 1, insbesondere etwa 0,1 bis 1 mm liegt.

Bei der Polymerisation werden die Monomeren gemäß den eingangs zitierten Literaturstellen in ein Polymerisationssystem, in dem eine Temperatur von 60 bis 125, bevorzugt 80 bis 110°C und ein Druck von 5 bis 70, bevorzugt 20 bis 50 bar herrscht, kontinuierlich eingeführt (vgl. insbesondere EP-A-0 230 019 und EP-A-0 260 647 sowie EP-A-0 232 701).

Die Polymerisation selbst erfolgt mittels eines Titan enthaltenden Katalysators sowie einer Aluminium enthaltenden Katalysatorkomponente sein. Solche Katalysatorsysteme sind dem Fachmann aus der Literatur und Praxis derartig geläufig, daß sich an dieser Stelle eine nähere Erläuterung erübrigt. Es sei hierzu insbesondere die Druckschriften EP-A-0 230 019 und EP-A-0 260 647 verwiesen. Derartige Katalysatoren und deren Verwendung bei der Polymerisation von Ethylen in der Gasphase sind aus obiger Literatur bekannt, so daß hier nicht mehr auf die Einzelheiten eingegangen werden muß. Die Katalysatoren werden üblicherweise in Mengen von 0,001 bis 0,05 Gew.-%, bezogen auf das hergestellte Polymerisat, angewendet. Für die Herstellung von ultrahochmolekularem Polyethylen mit dem angegebenen Korngrößenbereich ist es notwendig, daß der mittlere Durchmesser der Katalysatorpartikel 20 µm nicht übersteigt.

Was für das Katalysatorsystem zu sagen war, gilt sinngemäß auch für gegebenenfalls zusätzlich mit einzusetzenden Molekulargewichtsreglern, wie insbesondere Wasserstoff.

Die Ethylenhomo- oder -copolymerisation soll nach bekannten Verfahren in der Gasphase in einem durchmischten trockenen Schüttbett aus kleinteiligem Polymerisat durchgeführt werden. Polymerisation in der Gasphase bedeutet dabei, daß weder ein Lösungs- oder Suspendiermittel für Monomere oder Polymere in der Polymerisationszone vorhanden ist, noch, daß ein überkritisches Ethylen mit flüssigkeitsähnlichen Dichten und Lösungseigenschaften vorliegt. Unter einem durchmischten Schüttbett wird sowohl ein gerührtes Schüttbett als auch ein Wirbelschichtbett verstanden. Das Verfahren in einem gerührten Schüttbett basiert im wesentlichen auf der aus den US-Patenten 3 254 070 und 3 350 376 sowie dem britischen Patent 1 552 438 bekannten Verfahrensart. Ein besonders bevorzugtes Verfahren ist in der EP-A1-0 110 087 beschrieben, bei dem die Polymerisationswärme durch Joule-Thomson-Kühlung abgeführt wird, indem man ein gegenüber dem Polymerisationsdruck komprimiertes und gegenüber der Polymerisationstemperatur kälteres Monomerengemisch in überschüssiger Menge in die Polymerisationszone entspannt, derart, daß dort durch die dabei entstehende Joule-Thomson-Kälte die gewünschte Polymerisationstemperatur aufrechterhalten bleibt und die gasförmige, nicht durch Polymerisation verbrauchte Menge des Monomerengemisches aus der Polymerisationszone abgezogen und nach Komprimierung sowie Kühlung im Kreislauf wieder der Polymerisationszone zugeführt wird. Das Verfahren in einem durchgewirbelten Schüttbett, das sogenanntge Wirbelschichtverfahren, ist ebenfalls so bekannt, daß es hierzu keiner besonderen Erläuterung bedarf (vgl. EP-B1-0 004 966 und EP-A1-0 089 691).

Die Abführung der Polymerisationswärme erfolgt durch Kühlung des Monomerkreisgases. Diese Kühlung kann durch übliche Wärmeaustauscher (vgl. z.B. US-A-4 012 573) oder durch Entspannungskühlung (vgl. EP-A1-0 110 087) erfolgen.

Das Austragen des Polymerisats aus der Polymerisationszone erfolgt üblicherweise durch Entspannungsventile, die periodisch geöffnet werden.

Nach erfindungsgemäßem Verfahren soll das Antistatikum in Mengen von 5 bis 1000, bevorzugt 50 bis 500 Gew.%, bezogen auf die Katalysatorkomponente vor dem Eindosieren in das Polymerisat mit dem Katalysator, bevorzugt durch Mischen und Kontaktieren bei Temperaturen zwischen 0 und 50, insbesondere 25 bis 35°C und bevorzugt in einem organischen Lösungsmittel, insbesondere in einem höher siedenden Paraffinöl oder in Hexan, eingesetzt und das entstandene Reaktionsprodukt dem Schüttbett von oben zugegeben werden. Das organische Lösungsmittel ist bevorzugt in Mengen von 100 bis 2000 Gew.%, bezogen auf die Katalysatorkomponente zugegen. Der Alkohol wird bevorzugt im molaren Verhältnis von Titan im Katalysator zu Hydroxylgruppen im Alkohol von 1:0,5 bis 1:10, insbesondere 1:0,5 bis 1:5, zugegeben und ist bevorzugt Hexanol oder Glycerin.

Antistatika sind Zusätze unterschiedlicher Zusammensetzung, welche die elektrostatische Aufladung verhindern. Geeignete Antistatika sind ein Chromsalz der Alkylsalicylsäure mit einer Alkylgruppe von 14 bis 18 Kohlenstoffatomen, ein Chromsalz der Stearylanthranilsäure, ein Calciumsalz eines eine Sulfonsäuregruppe tragenden Bernsteinsäuredioctyl- oder -didecylesters, ein Calciumsalz der Medialansäure oder ein Gemisch aus den genannten Komponenten. Eine Übersicht über Antistatika für Ethylenpolymerisate findet man in "Kunststoffe" 67, (1977), Seiten 154 bis 159 und in der EP-A1-0 107 127, Seiten 6 bis 10.

Besonders geeignet als antistatisch wirkende Substanz ist ein Produkt mit dem Handelsnamen KEROSTAT® 5009 der BASF AG, das aus einer Mischung aus Chrom-stearylanthranilat, Calciummedialanat und Ditertiärbutylphenol besteht, sowie ein Produkt mit dem Handelsnamen ASA 3 der Shell AG, das Chromalkylsalicylat und ein Calciumsalz eines Dialkylsulfosuccinats enthält.

Nach besonders bevorzugter Arbeitsweise erfolgt die Umsetzung der Katalysatorkomponente mit dem Antistatikum und dem Alkohol derart, daß in einem Rührbehälter unter Sauerstoff-Freiheit der Katalysator im Gewichtsverhältnis 1:5 in Paraffinöl, z.B. ONDINA® 15 der Shell AG, suspendiert wird und die resultierende Suspension bei 30°C mit Glycerin oder Hexanol und einer 40 gew.%igen Lösung von ASA 3 in ONDINA® 15 getrennt oder als Mischung eine Stunde lang umgesetzt wird, wobei das Gewichtsverhältnis Katalysator:ASA 3 1:1,7 und das Molverhältnis Titan im Katalysator:Hydroxylgruppen im Alkohol 1:1,2 beträgt. Die nach der Umsetzung erhaltene Katalysatorsuspension kann als solche oder in verdünnter bzw. konzentrierterer Form für die Polymerisation verwendet werden. Gleichfalls ist es möglich, den Katalysator vom Suspensionsmittel zu befreien und als trockenen Feststoff in den Reaktor zu dosieren.

Die mit der Erfindung erzielten Vorteile gegenüber dem in der EP-A-0 232 701 beschriebenen Verfahren sind darin zu sehen, daß sowohl die Bildung von anhaftenden und/oder abgelösten mehr oder weniger großen Polymerbelägen bzw. Polymerbrocken vermieden wird und die Reaktorbedingungen konstant einstellbar und reproduzierbar sind, die zu erreichenden Reaktorlaufzeiten ebenfalls hoch liegen als auch eine gleichmäßig gute Produktqualität hinsichtlich der Vermeidung von schwarzen Verunreinigungen und zum Erreichen einer hohen Schüttdichte im Produkt gegeben ist.

### Beispiel

83 Gew.-Teile eines Zieglerkatalysators mit einem Titangehalt von 2,3 Gew.% - wie in EP-A-0 230 019 beschrieben - werden in 440 Gew.-Teilen ONDINA® 15 suspendiert und bei 30°C mit einer Mischung aus 140 Gew.-Teilen ASA 3 und 1,5 Gew.-Teilen Glycerin in 200 Gew.-Teilen ONDINA® 15 in einem gerührten Behälter unter N₂-Atmosphäre eine Stunde lang umgesetzt.

62 g dieser so erhaltenen Katalysatorsuspension (entspricht 6 g Feststoffkatalysator) und 14 g Tri-i-butylaluminium als Cokatalysator werden stündlich in einen 1,5 m³-Reaktor, der mit 350 kg Polyethylengrieß befüllt ist und in dem sich zur Durchmischung des Reaktorinhalts ein mit 80 Umdrehungen pro Minute laufender Rührer befindet, von oben in das Pulverbett dosiert. Dem Reaktor wird Ethylen kontinuierlich bei 40 bar zugeführt. Die Reaktionstemperatur beträgt 90°C. Sie wird dadurch aufrechterhalten, daß nicht umgesetztes heißes Ethylen aus dem Reaktor abgeführt, abgekühlt, komprimiert und nach Entspannung auf Reaktordruck kalt wieder in die Reaktionszone eingeführt wird.

Aus dem Reaktor werden stündlich 58 kg Polyethylen mit einem Molekulargewicht von ca. 6·10⁶ ausgetragen und das verbrauchte Kreisgas wird durch Frischethylen ersetzt.

Ohne Brocken- und Wandbelagbildung im Reaktor erhält man ein Produkt mit einer Viskositätszahl [η] (gemäß DIN 53 728) von 36±1 dl/g und einer Polymerendichte (gemäß DIN 53 479) von 0,928 g/cm³. Die Schüttdichte des Polymerisats nach DIN 53 468 beträgt 450 g/l. Nach DIN 58 834 werden in 300 g Polyethylen keine schwarzen Fremdpartikel als Verunreinigungen visuell festgestellt.

### Vergleichsbeispiel

Es wird wie im Beispiel verfahren mit dem Unterschied, daß nach dem Antistatikum ASA 3 kein Glycerin zugegeben wird.

Aus dem Reaktor werden stündlich 65 kg Polyethylen ausgetragen.

Ohne Brocken- und Wandbelagbildung im Reaktor erhält man ein Produkt mit einer Viskositätszahl [η] (gemäß DIN 53 728) von 33±1 dl/g und einer Polymerendichte (gemäß DIN 53 479) von 0,930 g/cm³. Die Schüttdichte des Polymerisats beträgt 440 g/l (DIN 53 468). Nach DIN 58 834 werden in 300 g Polyethylen acht schwarze Fremdpartikel als Verunreinigungen visuell festgestellt.

## Patentansprüche (Patentansprüche für folgende(n) Vertragsstaat(en): AT, BE, DE, FR, GB, IT, NL, SE)

1. Verfahren zur Herstellung von ultrahochmolekularen Ethylenpolymerisaten durch Homopolymerisation von Ethylen oder Copolymerisation von Ethylen mit Ethylen copolymerisierbaren Verbindungen durch kontinuierliches Einführen der Monomeren in ein Polymerisationssystem, in dem eine Temperatur zwischen 60 und 125°C und ein Druck zwischen 5 und 70 bar herrscht, wobei man die Polymerisation in Anwesenheit eines Titan enthaltenden Katalysators, eines Antistatikums und gegebenenfalls eines Molekulargewichtsreglers in der Gasphase in einem durchmischten trockenen Schüttbett aus kleinteiligem Polymerisat mit einer mittleren Teilchengröße von gleich oder kleiner als 1 mm unter Abfuhr der Polymerisationswärme durch Kühlung des Ethylenkreisgases ausführt, und Austragen des Polymerisats aus dem Polymerisationssystem, dadurch gekennzeichnet, daß das Antistatikum in Mengen von 5 bis 1000 Gew.%, bezogen auf die Katalysatorkomponente, vor dem Eindosieren in das Polymerisationssystem mit dem Katalysator in Gegenwart mindestens eines ein- oder mehrwertigen Alkohols mit Schmelzpunkten unterhalb der Polymerisationstemperatur umgesetzt und das entstandene Reaktionsprodukt dem Schüttbett von oben zugegeben wird.

2. Verfahren nach Anspruch 1, dadurch gekennzeichnet, daß das Antistatikum ein Chromsalz der Alkylsalicylsäure mit einer Alkylgruppe von 14 bis 18 Kohlenstoffatomen, ein Chromsalz der Stearylanthanilsäure, ein Calciumsalz eines eine Sulfonsäuregruppe tragenden Bernsteinsäuredioctyl- oder -didecylesters, ein Calciumsalz der Medialansäure oder ein Gemisch aus den genannten Komponenten ist.

3. Verfahren nach den Ansprüchen 1 oder 2, dadurch gekennzeichnet, daß das Antistatikum in Mengen von 50 bis 500 Gew.% mit dem Katalysator umgesetzt wird.

4. Verfahren nach den Ansprüchen 1 bis 3, dadurch gekennzeichnet, daß man Alkanole mit 4 bis 10 Kohlenstoffatomen, Alkandiole mit 2 bis 8 Kohlenstoffatomen oder Alkantriole mit 3 bis 8 Kohlenstoffatomen verwendet.

5. Verfahren nach den Ansprüchen 1 bis 4, dadurch gekennzeichnet, daß das molare Verhältnis von Titan im Katalysator zu Hydroxylgruppen im Alkohol 1:0,1 bis 1:10 beträgt.

6. Verfahren nach Anspruch 1, dadurch gekennzeichnet, daß der Akohol Hexanol oder Glycerin ist.

7. Ultrahochmolekulares Ethylenpolymerisat erhältlich nach einem der Ansprüche 1 bis 6.

## Patentansprüche (Patentansprüche für folgende(n) Vertragsstaat(en): ES)

1. Verfahren zur Herstellung von ultrahochmolekularen Ethylenpolymerisaten durch Homopolymerisation von Ethylen oder Copolymerisation von Ethylen mit Ethylen copolymerisierbaren Verbindungen durch kontinuierliches Einführen der Monomeren in ein Polymerisationssystem, in dem eine Temperatur zwischen 60 und 125°C und ein Druck zwischen 5 und 70 bar herrscht, wobei man die Polymerisation in Anwesenheit eines Titan enthaltenden Katalysators, eines Antistatikums und gegebenenfalls eines Molekulargewichtsreglers in der Gasphase in einem durchmischten trockenen Schüttbett aus kleinteiligem Polymerisat mit einer mittleren Teilchengröße von gleich oder kleiner als 1 mm unter Abfuhr der Polymerisationswärme durch Kühlung des Ethylenkreisgases ausführt, und Austragen des Polymerisats aus dem Polymerisationssystem, dadurch gekennzeichnet, daß das Antistatikum in Mengen von 5 bis 1000 Gew.%, bezogen auf die Katalysatorkomponente, vor dem Eindosieren in das Polymerisationssystem mit dem Katalysator in Gegenwart mindestens eines ein- oder mehrwertigen Alkohols mit Schmelzpunkten unterhalb der Polymerisationstemperatur umgesetzt und das entstandene Reaktionsprodukt dem Schüttbett von oben zugegeben wird.

2. Verfahren nach Anspruch 1, dadurch gekennzeichnet, daß das Antistatikum ein Chromsalz der Alkylsalicylsäure mit einer Alkylgruppe von 14 bis 18 Kohlenstoffatomen, ein Chromsalz der Stearylanthanilsäure, ein Calciumsalz eines eine Sulfonsäuregruppe tragenden Bernsteinsäuredioctyl- oder -didecylesters, ein Calciumsalz der Medialansäure oder ein Gemisch aus den genannten Komponenten ist.

3. Verfahren nach den Ansprüchen 1 oder 2, dadurch gekennzeichnet, daß das Antistatikum in Mengen von 50 bis 500 Gew.% mit dem Katalysator umgesetzt wird.

4. Verfahren nach den Ansprüchen 1 bis 3, dadurch gekennzeichnet, daß man Alkanole mit 4 bis 10 Kohlenstoffatomen, Alkandiole mit 2 bis 8 Kohlenstoffatomen oder Alkantriole mit 3 bis 8 Kohlenstoffatomen verwendet.

5. Verfahren nach den Ansprüchen 1 bis 4, dadurch gekennzeichnet, daß das molare Verhältnis von Titan im Katalysator zu Hydroxylgruppen im Alkohol 1:0,1 bis 1:10 beträgt.

6. Verfahren nach Anspruch 1, dadurch gekennzeichnet, daß der Akohol Hexanol oder Glycerin ist.

## Claims (Claims for the following Contracting State(s): AT, BE, DE, FR, GB, IT, NL, SE)

1. A process for preparing an ultrahigh molecular weight ethylene polymer by homopolymerization of ethylene or by copolymerization of ethylene with a compound copolymerizable therewith by continuously feeding the monomer into a polymerization system at 60-125°C and 5-70 bar, conducting the polymerization in the presence of a titanium-containing catalyst and an antistat and in the presence or absence of a molecular weight regulator in the gas phase in a thoroughly mixed dry bed of finely divided polymer having an average particle size of equal to or less than 1 mm with removal of the heat of polymerization by cooling the ethylene cycle gas, and discharging the polymer from the polymerization system, which comprises reacting the antistat, before introduction into the polymerization system, in amounts of from 5 to 1000 % by weight, based on the catalyst component, with the catalyst in the presence of one or more monohydric or polyhydric alcohols having melting points below the polymerization temperature and adding the resulting reaction product to the bed from above.

2. A process as claimed in claim 1, wherein the antistat is a chromium salt of an alkylsalicylic acid having an alkyl group of from 14 to 18 carbon atoms, a chromium salt of stearylanthranilic acid, a calcium salt of a sulfo-containing dioctyl or didecyl succinate, a calcium salt of Medialan acid, or a mixture thereof.

3. A process as claimed in claim 1 or 2, wherein the antistat is reacted with the catalyst in amounts of from 50 to 500 % by weight.

4. A process as claimed in claims 1 to 3, wherein an alkanol of from 4 to 10 carbon atoms, an alkanediol of from 2 to 8 carbon atoms or an alkanetriol of from 3 to 8 carbon atoms is used.

5. A process as claimed in claims 1 to 4, wherein the molar ratio of titanium in catalyst to hydroxyl in alcohol is from 1:0.1 to 1:10.

6. A process as claimed in claim 1, wherein the alcohol is hexanol or glycerol.

7. An ultrahigh molecular weight ethylene polymer obtainable as claimed in any one of claims 1 to 6.

## Claims (Claims for the following Contracting State(s): ES)

1. A process for preparing an ultrahigh molecular weight ethylene polymer by homopolymerization of ethylene or by copolymerization of ethylene with a compound copolymerizable therewith by continuously feeding the monomer into a polymerization system at 60-125°C and 5-70 bar, conducting the polymerization in the presence of a titanium-containing catalyst and an antistat and in the presence or absence of a molecular weight regulator in the gas phase in a thoroughly mixed dry bed of finely divided polymer having an average particle size of equal to or less than 1 mm with removal of the heat of polymerization by cooling the ethylene cycle gas, and discharging the polymer from the polymerization system, which comprises reacting the antistat, before introduction into the polymerization system, in amounts of from 5 to 1000 % by weight, based on the catalyst component, with the catalyst in the presence of one or more monohydric or polyhydric alcohols having melting points below the polymerization temperature and adding the resulting reaction product to the bed from above.

2. A process as claimed in claim 1, wherein the antistat is a chromium salt of an alkylsalicylic acid having an alkyl group of from 14 to 18 carbon atoms, a chromium salt of stearylanthranilic acid, a calcium salt of a sulfo-containing dioctyl or didecyl succinate, a calcium salt of Medialan acid, or a mixture thereof.

3. A process as claimed in claim 1 or 2, wherein the antistat is reacted with the catalyst in amounts of from 50 to 500 % by weight.

4. A process as claimed in claims 1 to 3, wherein an alkanol of from 4 to 10 carbon atoms, an alkanediol of from 2 to 8 carbon atoms or an alkanetriol of from 3 to 8 carbon atoms is used.

5. A process as claimed in claims 1 to 4, wherein the molar ratio of titanium in catalyst to hydroxyl in alcohol is from 1:0.1 to 1:10.

6. A process as claimed in claim 1, wherein the alcohol is hexanol or glycerol.

## Revendications (Revendications pour l'(les) Etat(s) contractant(s) suivant(s): AT, BE, DE, FR, GB, IT, NL, SE)

1. Procédé de préparation de polymères d'éthylène de poids moléculaire très élevé par homopolymérisation d'éthylène ou copolymérisation d'éthylène avec des composés copolymérisables avec l'éthylène, par introduction continue des monomères dans un système de polymérisation dans lequel règnent une température de 60 à 125°C et une pression de 5 à 70 bar, la polymérisation étant conduite en présence d'un catalyseur qui contient du titane, d'un antistatique et éventuellement d'un régulateur de poids moléculaire, en phase gazeuse, dans un lit de matière en vrac sèche et mélangée intimement, formé de polymère finement divisé ayant une grosseur moyenne de particules égale ou inférieure à 1 mm, avec évacuation de la chaleur de polymérisation par refroidissement du gaz éthylène de recyclage, et le polymère étant déchargé du système de polymérisation, caractérisé en ce qu'avant son introduction dans le système de polymérisation, l'antistatique est mis en réaction, dans des quantités de 5 à 1000% en poids par rapport au composant catalyseur, avec le catalyseur en présence d'au moins un mono- ou un polyalcool ayant un point de fusion inférieur à la température de polymérisation, et en ce que le produit de réaction formé est introduit par le haut dans le lit de matière en vrac.

2. Procédé selon la revendication 1, caractérisé en ce que l'antistatique est un sel de chrome d'acide alkylsalicylique renfermant 14 à 18 atomes de carbone dans le groupement alkyle, un sel de chrome d'acide stéarylanthranilique, un sel de calcium d'un ester dioctylique ou didécylique d'acide succinique portant un groupement acide sulfonique, un sel de calcium d'acide médialanique ou un mélange des composants mentionnés.

3. Procédé selon la revendication 1 ou 2, caractérisé en ce que l'antistatique est mis en réaction avec le catalyseur dans des quantités de 50 à 500% en poids.

4. Procédé selon l'une quelconque des revendications 1 à 3, caractérisé en ce qu'on utilise des alcanols à 4-10 atomes de carbone, des alcanediols à 2-8 atomes de carbone ou des alcanetriols à 3-8 atomes de carbone.

5. Procédé selon l'une quelconque des revendications 1 à 4, caractérisé en ce que le rapport molaire du titane contenu dans le catalyseur aux groupements hydroxy contenus dans l'alcool est compris entre 1:0,1 et 1:10.

6. Procédé selon la revendication 1, caractérisé en ce que l'alcool est l'hexanol ou le glycérol.

7. Polymère d'éthylène de poids moléculaire très élevé, obtenu selon l'une quelconque des revendications 1 à 6.

## Revendications (Revendications pour l'(les) Etat(s) contractant(s) suivant(s): ES)

1. Procédé de préparation de polymères d'éthylène de poids moléculaire très élevé par homopolymérisation d'éthylène ou copolymérisation d'éthylène avec des composés copolymérisables avec l'éthylène, par introduction continue des monomères dans un système de polymérisation dans lequel règnent une température de 60 à 125°C et une pression de 5 à 70 bar, la polymérisation étant conduite en présence d'un catalyseur qui contient du titane, d'un antistatique et éventuellement d'un régulateur de poids moléculaire, en phase gazeuse, dans un lit de matière en vrac sèche et mélangée intimement, formé de polymère finement divisé ayant une grosseur moyenne de particules égale ou inférieure à 1 mm, avec évacuation de la chaleur de polymérisation par refroidissement du gaz éthylène de recyclage, et le polymère étant déchargé du système de polymérisation, caractérisé en ce qu'avant son introduction dans le système de polymérisation, l'antistatique est mis en réaction, dans des quantités de 5 a 1000% en poids par rapport au composant catalyseur, avec le catalyseur en présence d'au moins un mono- ou un polyalcool ayant un point de fusion inférieur à la température de polymérisation, et en ce que le produit de réaction formé est introduit par le haut dans le lit de matière en vrac.

2. Procédé selon la revendication 1, caractérisé en ce que l'antistatique est un sel de chrome d'acide alkylsalicylique renfermant 14 à 18 atomes de carbone dans le groupement alkyle, un sel de chrome d'acide stéarylanthranilique, un sel de calcium d'un ester dioctylique ou didécylique d'acide succinique portant un groupement acide sulfonique, un sel de calcium d'acide médialanique ou un mélange des composants mentionnés.

3. Procédé selon la revendication 1 ou 2, caractérisé en ce que l'antistatique est mis en réaction avec le catalyseur dans des quantités de 50 à 500% en poids.

4. Procédé selon l'une quelconque des revendications 1 a 3, caractérisé en ce qu'on utilise des alcanols à 4-10 atomes de carbone, des alcanediols à 2-8 atomes de carbone ou des alcanetriols à 3-8 atomes de carbone.

5. Procédé selon l'une quelconque des revendications 1 à 4, caractérisé en ce que le rapport molaire du titane contenu dans le catalyseur aux groupements hydroxy contenus dans l'alcool est compris entre 1:0,1 et 1:10.

6. Procédé selon la revendication 1, caractérisé en ce que l'alcool est l'hexanol ou le glycérol.
